# EUROPEAN PATENT APPLICATION

(11) **EP 4 610 555 A1**
(43) Date of publication of application: **03.09.2025**
(21) Application number: 24160981.7
(22) Date of filing: 01.03.2024
(51) Int. Cl.: F21S 43/14, F21S 43/237, F21S 43/247, F21S 43/20, F21V 8/00

(54) **LIGHTING ASSEMBLY FOR A VEHICLE**

(71) Applicant: Hella Autotechnik Nova s.r.o., 78985 Mohelnice (CZ)
(72) Inventor: Simicek, Marek, Olomouc 779 00 (CZ)
(74) Representative: Behr-Wenning, Gregor

(57) **Abstract**

Lighting assembly for a vehicle comprising a light source (1) and a lightguide element (2) formed by a one-piece block of material, wherein the lightguide element (2) comprises a gap (3) delimited by at least a second optical surface (5) and a third optical surface (6). The lighting assembly further comprises a thin lightguide part (7) adjacent to the lightguide element (2). The second optical surface (5) is adapted to direct light across the gap (3) to the third optical surface (6) and the third optical surface (6) is adapted to input light into the lightguide element (2) and subsequently into the thin lightguide part (7) to form a light beam with a diameter, which is dimensionally comparable to the size of the light emitting part (1a) of the light source (1).

## Description

### Technical field

The present invention relates to a lighting assembly for a vehicle, which is used to input light into a thin lightguide.

### Background of the Invention

Currently, LEDs attached to a printed circuit board are used in an automotive industry. These LEDs have a large beam angle (160-170°), which is advantageous when used in headlights for direct lighting, however several shortcomings and difficulties appear when these LEDs are used to input light into a thin lightguide. Especially, the light losses are very high and beyond the efficiency limit. It is due to the fact that each individual optical element (lens, reflective surface etc.) used for inputting light from LED into a thin lightguide reduces efficiency often by tens of percent, especially if these optical elements are made of different materials.

Laser diodes may be used as well, but it is necessary to input the already thin light beam into a very narrow space of the optical fiber entrance. This has to be done using so-called ferrule, a precise opto-mechanical element that aligns these components into a common axial position. Compared to a thin lightguide, optical fiber has lower optical losses, however, on the other hand, it is relatively fragile, less resistant to mechanical stress and more expensive. In general, optical fiber in combination with a laser diode and a ferrule costs several times more than a standard LED used in combination with a thin lightguide. It is therefore more advantageous to use a standard LED.

One of the known methods of processing light from a light source with larger beam angle is the use of so-called air gap lens, as described e.g. in EP3502551 A1. In this document, a perforation is formed in a material of a lightguide so as to create two opposing lenses to adjust the light beam. However, in this solution (and other known solutions), such system is used primarily to create sufficiently homogenous or assumed, in terms of shape and intensity, output optical image, which is many times larger than the input light source.

Therefore, it would be desirable to come up with a solution that would utilize a standard LED (not an expensive optical fiber with a laser diode) and that would effectively reduce its wide beam into a thin lightguide, which is dimensionally comparable to a size of the light emitting part of the LED. This should be done with as few optical elements as possible. The desired solution should also enable simple and inexpensive manufacturing from one piece of material, e.g. also integrally with the lightguide.

### Summary of the Invention

The shortcomings of the solutions known in the prior art are to some extent eliminated by a lighting assembly for a vehicle comprising a light source and a lightguide element formed by a one-piece block of material. The light source has a light-emitting part and the lightguide element has a first optical surface for inputting light from the light source into the lightguide element, wherein the first optical surface is larger than the light-emitting part of the light source. The lightguide element comprises a gap delimited by at least a second optical surface and a third optical surface, wherein the second optical surface is closer to the first optical surface than the third optical surface. The lighting assembly further comprises a thin lightguide part adjacent to the lightguide element, wherein a size of a cross-section of the thin lightguide part is dimensionally comparable to a size of the light-emitting part of the light source. The second optical surface is adapted to direct light across the gap to the third optical surface. The third optical surface is adapted to input light into the lightguide element and subsequently into the thin lightguide part to form a light beam with a diameter, which is dimensionally comparable to the size of the light-emitting part of the light source.

The lighting assembly according to the invention enables inputting light from the light source into the thin lightguide without using an expensive assembly comprising an optical fiber, a laser diode and a precise optomechanical-element (ferrule) that aligns these components into a common axial position. Instead, a light source with a large beam angle (especially standard LED with a beam angle about 160-170°) is used. Such solution is cheaper and enables manufacturing from one piece of material with as few optical elements as possible. Reducing number of optical elements reduces light losses as well.

The thin lightguide is represented here by the thin lightguide part, wherein a size of a cross-section of the thin lightguide part is dimensionally comparable to a size of the light-emitting part of the light source. By this cross-section is meant the cross-section perpendicular to the length of the thin lightguide part. For example, if the cross-section of the thin lightguide part has a circular shape, this means that a diameter of the thin lightguide part is dimensionally comparable to the size of the light-emitting part of the light source. If the cross-section of the thin lightguide part has a square shape, this means that a size of a side of the square is dimensionally comparable to the size of the light-emitting part of the light source. If the cross-section of the thin lightguide part has another different shape, this means that certain significant dimension of this shape is dimensionally comparable to the size of the light-emitting part of the light source. The length of the thin lightguide is larger than the size of its cross-section and may vary in various embodiments. The term "dimensionally comparable" means that the compared dimensions (respective sizes) do not differ very significantly, for example one dimension is not several times or even an order of magnitude larger than the other dimension. Standard LEDs in relation to standard lightguides have a size ratio of approximately 1:5 to 1:10 - in this case, the respective sizes are not dimensionally comparable. However, standard LEDs in relation to the thin lightguide part according to the present invention may preferably approach a size ratio 1:2 and higher- up to a limit of 1:1. In this context, "dimensionally comparable" means that the size of the light-emitting part of the light source and the size of the cross-section of the thin lightguide part are in a ratio higher than 1:3, preferably higher than 1:2, more preferably higher than 1:1.5 and most preferably 1:1. The cross-section of the thin lightguide part is thus not significantly (not more than three times) larger than the area of the light-emitting part of the light source. In other words, the cross-section of the thin lightguide part is preferably at most three times, preferably at most two times, larger than the light-em itting part of the light source, more preferably at most 1.5 times larger and most preferably the size of the light-emitting part of the light source and the size of the cross-section of the thin lightguide part are equal. Specific dimensions can be chosen for example according to the size of a vehicle lamp into which the lighting assembly is mounted.

The light-emitting part of the light source corresponds to the part of the light source which outputs light towards the first optical surface of the lightguide element. Especially, the light source may be LED with a large beam angle (typically about 160-170°) and the light-emitting part may correspond to a phosphor layer of the light source. The size of the light-emitting area may correspond to the significant dimension of a phosphor layer area. For example, if the light-emitting part has a circular shape, the size of the light-emitting part may be its diameter. If the light-emitting part has a square shape, the size of the light-emitting part may be the size of its sides. If the light-emitting part has a rectangular shape, the size of the light-emitting part may be for example the size of its longer sides, etc.

It is important to situate the light source relatively close to the first optical surface to ensure that as much light as possible will pass through the first optical surface into the lightguide element. However, it is not advisable to situate the light source too close to the first optical surface as undesirable thermal effects may occur, which can lead to a change in the optical or mechanical properties of the lightguide element. The optimal distance between the light source and the first optical surface therefore depends on the power of the light source, the size of the light-emitting part and the size of the first optical surface and can be calculated or found by practical testing.

Lightguide element is formed by a one-piece block of material. It means that the lightguide element is formed by a one-piece block, however, it does not mean that this one-piece block must be made of only one material. Alternatively, it may be made of more different materials (for example two different materials), if it is formed by a one-piece block (for example using 2k injection moulding or 3D printing technology). The lightguide element may be made of any material suitable for guiding light, preferably plastic material, PMMA, silicon etc.

The thin lightguide part is preferably formed integrally with the lightguide element. This integral embodiment is more compact, easier and cheaper to produce, wherein the reduced number of components reduces light losses as well. Alternatively, but not preferably, the thin lightguide part and the lightguide element may be formed separately and may be connected, for example glued, to each other.

The first optical surface of the lightguide element is preferably convex and/or it comprises first micro-optical elements. The first optical surface corresponds to the input surface of the lightguide element, wherein the first optical surface can be formed for example as a spherical lens, which is curved (bulged) from the lightguide element towards the light source. Alternatively, other types of lenses (for example parabolic or free-form lenses) can be used. The lens of the first optical surface may or may not comprise first micro-optical elements, however the first micro-optical elements are needed, if the first optical surface is alternatively planar. When the light from the light source passes through the first optical surface, a divergent light beam turns into a substantially parallel light beam. This substantially parallel light beam passes through the lightguide element towards the second optical surface.

The second optical surface and the third optical surface of the lightguide element are preferably convex, which delimits the concave shape of the gap. The second optical surface can be formed for example as a spherical lens, which is curved (bulged) from the lightguide element towards the gap. The third optical surface can be formed for example as a spherical lens, which is curved (bulged) from the lightguide element towards the gap. Alternatively, other types of lenses (for example parabolic or free-form lenses) can be used. In some variants of the assembly, the second optical surface comprises second micro-optical elements and the third optical surface comprises third micro-optical elements, especially when the second optical surface and the third optical surface are planar - similarly as discussed above regarding the first optical surface. When the light passes through the second optical surface, a substantially parallel light beam turns into a convergent light beam. This convergent light beam passes through the gap towards the third optical surface. At certain distance, near the third optical surface, the light rays intersect in a focal point, which means that the light beam is convergent in front of the focal point and it is divergent behind the focal point. When the light beam passes through the third optical surface, a divergent light beam behind the focal point turns into a substantially parallel light beam. This substantially parallel light beam passes through the lightguide element to the thin lightguide part, wherein the diameter of this substantially parallel light beam is dimensionally comparable to the size of the light-emitting part of the light source.

The first micro-optical elements, the second micro-optical elements and the third micro-optical elements may be formed for example as notches, protrusion or steps of various shapes or dimensions, if they are adapted to direct light through the lightguide element as described.

In some variants of the assembly, some of the first optical surface, second optical surface and the third optical surface may be lenses and other may be planar. Alternatively, these optical surfaces can have various shapes or dimensions, if they are adapted to direct light through the lightguide element as described and to form the substantially parallel light beam with the diameter which is dimensionally comparable to the size of the light-emitting part of the light source.

Preferably, the lightguide element is formed using 2k injection moulding technology as one piece. Using this technology, it is possible to made the lightguide element from two different materials with different properties. For example, certain parts of the lightguide element can be made of a material with better optical properties and other parts can be made of a material with better mechanical properties, for example of a material with higher durability.

The lightguide element preferably comprises a central part and a peripheral part, wherein the central part comprises the first optical surface, the second optical surface and the third optical surface, wherein the central part is of a first material and the peripheral part is of a second material, wherein the second material is preferably harder than the first material. Harder material, for example harder plastic material, of the peripheral part is preferable, because the peripheral part can be used for fastening the lighting element into a vehicle lamp. On the other hand, softer material, for example softer plastic material, of the central part may have better optical properties. The thin lightguide part can be preferably made of a softer material as well.

The lightguide element preferably comprises at least one fastening element for fastening to another external component, for example to a housing or another part of a vehicle lamp into which the lighting element is mounted. Preferably, the at least one fastening element can be a bayonet-type fastening element. Alternatively, the at least one fastening element can be any other fastening element which ensures that the light-emitting part of the light source is coaxially aligned with the lightguide element. Thanks to the fastening element, it is possible to reduce the vibration of the lightguide element relative to the external component.

The shortcomings of the solutions known in the prior art are to some extent eliminated by a vehicle lamp comprising the lighting assembly according to the present invention. Such vehicle lamp may comprise more light sources (for example multiple LEDs in a row) and more lightguide elements and thin lightguide parts as needed.

### Description of drawings

A summary of the invention is further described by means of exemplary embodiments thereof, which are described with reference to the accompanying drawings, in which:
- Fig 1.: Shows a schematical sideview of an exemplary lighting assembly according to the invention.
- Fig 2.: Shows a schematical sideview of an exemplary lighting assembly according to the invention, wherein the light rays are depicted in this figure.
- Fig 3.: Shows a detail of a LED with a light-emitting part.

### Exemplary Embodiments of the Invention

The invention will be further described by means of exemplary embodiments with reference to the respective drawings.

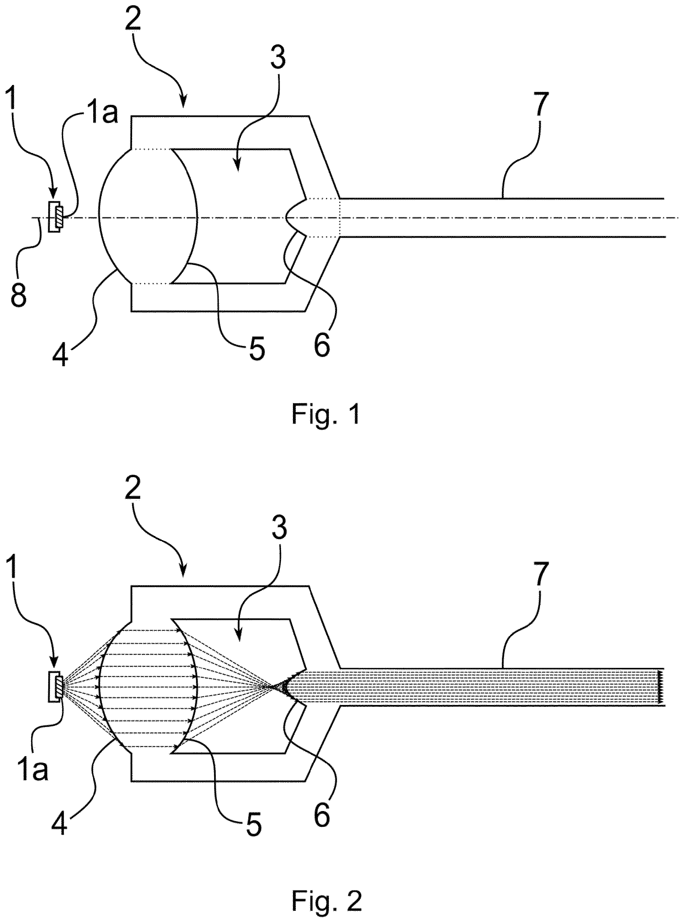

A first exemplary embodiment of the lighting assembly according to the invention is shown in Figs. 1 and 2. In this embodiment, the lighting assembly comprises a light source 1, a lightguide element 2 and a thin lightguide part 7, wherein the thin lightguide part 7 is formed integrally with the lightguide element 2. Thus, the lightguide element 2 together with the thin lightguide part 7 are formed by a one-piece block of a material, exemplary by a one-piece block of a plastic material. This block can be manufactured for example using conventional injection moulding process.

Fig. 1 schematically shows a sideview of the lighting assembly, wherein the imaginary transition between the lightguide element 2 and the thin lightguide part 7 is indicated by a vertical dotted line. It means that the thin lightguide part 7 is a kind of an elongation of the lightguide element 2 at its second end, however, it can be seen that the thin lightguide part 7 is narrower than the lightguide element 2. At its first end, the lightguide element 2 comprises a first optical surface 4 for inputting light from the light source 1 into the lightguide element 2, as will be discussed below.

The lightguide element 2 further comprises a gap 3 delimited by inner walls of the lightguide element 2, especially by a second optical surface 5 and a third optical surface 6. In the first exemplary embodiment, the gap 3 is further delimited by other inner walls corresponding to two arms of the lightguide element 2, which extend axially symmetrically in a width direction. The axis of the symmetry passes through the centre of the first optical surface 4, second optical surface 5, third optical surface 6 and the thin lightguide 7 and therefore corresponds to the optical axis 8 of the lighting assembly, which is indicated by horizontal dash-dotted line in Fig. 1. The imaginary transition between the arms of the lightguide 2 (the arms correspond to the peripheral part of the lightguide 2) and the central part of the lightguide 2, which comprises lenses defining the first optical surface 4, the second optical surface 5 and the third optical surface 6, is schematically indicated in Fig. 1 by horizontal dotted lines. In the first exemplary embodiment, when viewed from the front side (that is from the side of the light source 1), the first optical surface 4, the second optical surface 5 and the third optical surface 6 each have a circular shape, wherein the outer contour of the lightguide element 2 and the thin lightguide part 7 each have a square shape or a rectangular shape. The front view is not shown in the Figures.

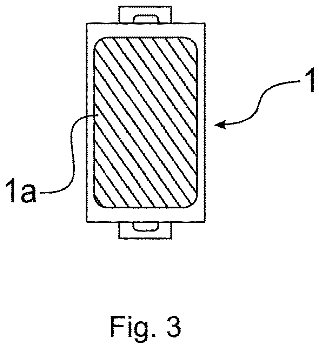

The light source 1 is situated outside the lightguide element 2 in front of the first optical surface 4 and comprises a light-emitting part 1a adapted to emit light towards the first optical surface 4. In the first exemplary embodiment, the light source 1 is a LED, wherein the light-emitting part 1a of the light source 1 corresponds to a phosphor layer of a LED, shown as the hatched area in Fig. 3 and schematically in Fig. 1 and Fig. 2 as well. The LED as the light source 1 has a large beam angle, typically about 160-170°, and it is therefore important to situate the light source 1 relatively close to the first optical surface 4 to ensure that as much light as possible will pass through the first optical surface 4 into the lightguide element 2. However, it is not advisable to situate the light source 1 too close to the first optical surface 4 as undesirable thermal effects may occur, which can lead to a change in the optical or mechanical properties of the lightguide element 2. The optimal distance between the light source 1 and the first optical surface 4 therefore depends on the power of the light source 1, the size of the light-emitting part 1a and the size of the first optical surface 4 and can be calculated or found by practical testing. In any case, the light-emitting part 1a of the light source 1 is coaxially aligned with the lightguide element 2, which means that the optical axis 8 passes through the centre of the light-emitting part 1a of the light source 1 as well.

In Fig. 1 and Fig. 2, the mutual position of the light source 1 and the lightguide element 2 and their respective dimensions are shown only schematically so as to show the function of the lighting assembly more clearly, especially in Fig. 2, where the light rays are depicted using dashed lines with arrows. In reality, the light source 1 would be closer to the lightguide element 2 and the beam angle of the light source 1 would be larger than depicted. Exemplary, the size of the light-emitting part 1a is about 5 mm, the diameter of the first optical surface 4 and the second optical surface 5 is about 20 mm, the diameter of the third optical surface 6 is about 7 mm, the size of the cross-section of the thin lightguide part 7 is about 7 mm and the width of the lightguide element 2 in its widest part is about 30 mm.

Fig. 2 shows how light rays from the light source 1 pass through the first optical surface 4 into the lightguide element 2, then through the second optical surface 5 out of the lightguide element 2 into the gap 3, then through the third optical surface 6 again into the lightguide element 2 and subsequently to the thin lightguide part 7.

In the first exemplary embodiment, the first optical surface 4 of the lightguide element 2 is spherical and convex, which means that it is curved (bulged) outwards from the lightguide element 2. This part of the lightguide element 2 with the first optical surface 4 thus forms a spherical lens. When the light from the light source 1 passes through the first optical surface 4, a divergent light beam turns into a substantially parallel light beam. This substantially parallel light beam passes through the lightguide element 2 towards the second optical surface 5.

In this embodiment, the second optical surface 5 of the lightguide element 2 is spherical and convex, which means that it is curved (bulged) outwards from the lightguide element 2 or, in other words, outwards from the first optical surface 4. This part of the lightguide element 2 with the second optical surface 5 thus forms a spherical lens. When the light passes through the second optical surface 5, a parallel light beam turns into a convergent light beam. This convergent light beam passes through the gap 3 towards the third optical surface 6. At certain distance, near the third optical surface 6, the light rays intersect in a focal point, which means that the light beam is convergent in front of the focal point and it is divergent behind the focal point.

In this embodiment, the third optical surface 6 of the lightguide element 2 is spherical and convex, which means that it is curved (bulged) outwards from the lightguide element 2. The third optical surface 6 thus forms a spherical lens. On the contrary, as can be seen in Fig. 1 or Fig. 2, the gap 3 delimited by the second optical surface 5 and the third optical surface 6 has a concave shape. When the light beam passes through the third optical surface 6, a divergent light beam behind the focal point turns into a substantially parallel light beam. This substantially parallel light beam passes through the lightguide element 2 to the thin lightguide part 7, wherein the diameter of this substantially parallel light beam is dimensionally comparable to the size of the light-emitting part 1a of the light source 1. A size of a cross-section of the thin lightguide part 7 and the diameter of the third optical surface 6 are dimensionally comparable to the size of the light-emitting part 1a of the light source 1 as well.

In a second exemplary embodiment, the lighting assembly is the same as in the first exemplary embodiment, except that the first optical surface 4, the second optical surface 5 and the third optical surface 6 are not spherical and convex. Instead, the first optical surface 4, the second optical surface 5 and the third optical surface 6 are planar and they comprise first micro-optical elements, second micro-optical elements and third micro-optical elements respectively to direct light from the light source 1 through the first optical surface 4, the second optical surface 5, the gap 3 and the third optical surface 6 to the thin lightguide part 7, as described above.

In a third exemplary embodiment, the lighting assembly is the same as in the first embodiment or the second embodiment, however the lightguide element 2 is formed using 2k injection moulding as a one-piece block of material - specifically as a one-piece block consisting of two different materials. In this embodiment, the peripheral part of the lightguide element 2 is of a harder material than the central part of the lightguide element 2 comprising the first optical surface 4, the second optical surface 5 and the third optical surface 6.

In yet another exemplary embodiment, the thin lightguide part 7 is not formed integrally with the lightguide element 2. Instead, the thin lightguide part 7 and the lightguide element 2 are formed separately and they are connected, for example glued, to each other.

In addition, other exemplary embodiments may be provided in accordance with the alternatives described in the Summary of the Invention. Other embodiments within the scope of the claims will be apparent to one skilled in the art.

### Reference list

- 1.: Light source
- 1a.: Light-emitting part
- 2.: Lightguide element
- 3.: Gap
- 4.: First optical surface
- 5.: Second optical surface
- 6.: Third optical surface
- 7.: Thin lightguide part
- 8.: Optical axis

## Claims

1. Lighting assembly for a vehicle comprising a light source (1) and a lightguide element (2) formed by a one-piece block of material, wherein the light source (1) has a light-emitting part (1a) and the lightguide element (2) has a first optical surface (4) for inputting light from the light source (1) into the lightguide element (2), wherein the first optical surface (4) is larger than the light-emitting part (1a) of the light source (1), wherein the lightguide element (2) comprises a gap (3) delimited by at least a second optical surface (5) and a third optical surface (6), wherein the second optical surface (5) is closer to the first optical surface (4) than the third optical surface (6), **characterized in that** the lighting assembly further comprises a thin lightguide part (7) adjacent to the lightguide element (2), wherein a size of a cross-section of the thin lightguide part (7) is dimensionally comparable to a size of the light-emitting part (1a) of the light source (1), wherein the second optical surface (5) is adapted to direct light across the gap (3) to the third optical surface (6) and the third optical surface (6) is adapted to input light into the lightguide element (2) and subsequently into the thin lightguide part (7) to form a light beam with a diameter, which is dimensionally comparable to the size of the light-emitting part (1a) of the light source (1).

2. The lighting assembly according to claim 1 **characterized in that** the size of the light-emitting part (1a) of the light-source (1) and the size of the cross-section of the thin lightguide part (7) are in a ratio 1:2 or higher.

3. The lighting assembly according to any of the preceding claims **characterized in that** the thin lightguide part (7) is formed integrally with the lightguide element (2).

4. The lighting assembly according to any of the preceding claims **characterized in that** the first optical surface (4) of the lightguide element (2) is convex and/or it comprises first micro-optical elements.

5. The lighting assembly according to any of the preceding claims **characterized in that** the second optical surface (5) and the third optical surface (6) of the lightguide element (2) are convex, which delimits concave shape of the gap (3).

6. The lighting assembly according to any of the preceding claims **characterized in that** the second optical surface (5) comprises second micro-optical elements and the third optical surface (6) comprises third micro-optical elements.

7. The lighting assembly according to any of the preceding claims **characterized in that** the lightguide element (2) is formed using 2k injection moulding technology as one piece.

8. The lighting assembly according to claim 7 **characterized in that** the lightguide element (2) comprises a central part and a peripheral part, wherein the central part comprises the first optical surface (4), the second optical surface (5) and the third optical surface (6), wherein the central part is of a first material and the peripheral part is of a second material, wherein the second material is harder than the first material.

9. The lighting assembly according to any of the preceding claims **characterized in that** the lightguide element (2) comprises at least one fastening element for fastening to another external component.

10. Vehicle lamp **characterized in that** it comprises the lighting assembly according to any of the preceding claims.
